Europäisches Patentamt

European Patent Office

Office européen des brevets

(19)

(11) EP 0 400 408 B1

(12) EUROPÄISCHE PATENTSCHRIFT

(45) Veröffentlichungstag und Bekanntmachung des Hinweises auf die Patenterteilung:
27.11.1996 Patentblatt 1996/48

(51) Int Cl.⁶: **G02B 6/255**, G01B 11/27, G01B 11/14

(21) Anmeldenummer: 90109388.0

(22) Anmeldetag: 17.05.1990

(54) **Verfahren zur Ausrichtung zweier Lichtwellenleiter-Faserenden und Einrichtung zur Durchführung des Verfahrens**

Method for aligning two fibre ends and apparatus for its implementation

Procédé pour aligner deux extrémités de fibres optiques et dispositif pour sa mise en oeuvre

(84) Benannte Vertragsstaaten:
AT BE CH DE FR GB IT LI NL SE

(30) Priorität: 02.06.1989 DE 3918089

(43) Veröffentlichungstag der Anmeldung:
05.12.1990 Patentblatt 1990/49

(73) Patentinhaber: SIEMENS AKTIENGESELLSCHAFT
80333 München (DE)

(72) Erfinder:
• Lieber, Winfried, Dr.-Ing.
D-8033 Krailling (DE)
• Eder, Thomas, Dipl.-Ing.
D-8033 Krailling (DE)

(56) Entgegenhaltungen:
EP-A- 0 030 108          EP-A- 0 142 062
DE-A- 3 429 947          GB-A- 2 110 412

• ELECTRONICS AND COMMUNICATIONS IN JAPAN Bd. 72, Nr. 3, März 1989, NEW YORK, USA Seiten 81 - 90; ATSUSHI IDE ET AL.: 'fiber misalignment measurement method using one-directionally observed image'
• Transactions of I.E.C.E., Japan, Vol.E68, Nr.12, Seiten 836-843: "A Fully Automatic Optical Fibre Arc-Fusion Splice Machine".

**Beschreibung**

Die Erfindung betrifft ein Verfahren zur fluchtenden Ausrichtung zweier jeweils in einer Halteeinrichtung gehaltener Faserenden von Lichtwellenleiter, wobei die sich als Zylinderlinsen verhaltenden Faserenden mittels eines Lichtstrahls so beleuchtet und angeordnet werden, daß ein Maximum der Intensität in der Mitte eines Schattenbildes der Faserenden gebildet wird, und wobei ein so erzeugtes Bild der Faserenden mit dem Bildsensor einer Videokamera abgetastet und die Position der Faserenden in zwei zueinander und zum Lichtstrahl senkrechten Ebenen bestimmt wird.

Aus "Electronics and Communications in Japan" Bd 72, Nr. 3, März 1989, New York, USA; Seiten 81 bis 90 ist ein Meßverfahren zur Bestimmung des Versatzes von Faserenden von Lichtwellenleitern bekannt. Die Bestimmung des Versatzes in einer Richtung (z.B. Y-Richtung) erfolgt dabei so, daß die Position des Faserdurchmessers (d.h. der Außendurchmesser bestimmt wird). Die Faserachse selbst wird einfach als die Mitte der beiden Außenkanten des Faserenden angenommen. Dabei wird ein Schwellwert definiert, dessen Überschreitung als Überschreitung der Außenkante angesetzt wird. Der Nachteil eines derartigen Verfahrens besteht vor allem darin, daß der Fehlereinfluß vor allem bei niedrigen Signalwerten besonders groß wird, weil jede Störgröße (z.B. eine Verunreinigung, ein unsauberes Entfernen des Coatings oder dergleichen) sich hier am meisten auswirkt. In der zweiten Ebene wird bei dem bekannten Verfahren ein Größenvergleich der Amplitudenwerte der Maxima zweier aus der Beleuchtung der Faserenden erhaltener Kurven durchgeführt und der Versatz daraus berechnet. Bezug genommen wird dabei allein auf den Unterschied in der absoluten Größe dieser Maxima. Auch diese Amplitudenwerte sind in starkem Maße von Störgrößen beeinflußt (beispielsweise von der Sorgfalt mit der das Coating von den Faserenden abgezogen wird oder von einer Verschmutzung usw). Eine weitere mögliche Störgröße ist auch noch darin zu sehen, daß beim Spleißen von Fasern unterschiedlicher Hersteller und/oder unterschiedlichen Aufbaus von Haus aus Unterschiede bei den Maxima der Faserenden unvermeidlich sind. Die genannten Störgrößen gehen unmittelbar in die Qualität der Ausrichtung der Faserenden ein und beeinflussen diese ungünstiger Weise.

Aus der EP-A-0 142 062 ist eine Spleißeinrichtung bekannt, bei der in zwei zueinander senkrechten Ebenen jeweils zwei auf die Faserenden ausgerichtete optische Erfassungseinrichtungen angeodnet sind. Das von diesen optischen Erfassungseinrichtungen erhaltene Bild der Faserenden wird mittels eines Fotoumsetzers in ein elektrisches Signal umgesetzt. Die Signale aus den beiden zueinander senkrecht stehenden Meßebenen werden einer gemeinsamen Auswerteeinrichtung zu in Form eines Mikroprozessors zugeleitet, von dem aus Stellsignale für entsprechende Stellglieder bei einem der Faserenden ausgegeben werden.

Aus der US-PS 45 06 947 ist es bekannt, daß ultraviolettes Licht auf zwei Faserenden von Lichtwellenleitern gerichtet wird. Der Stoßstellenbereich wird in zwei zueinander senkrecht verlaufenden Richtungen über optische Linsen mittels einer Videokamera betrachtet und die so erhaltenen Bilder von der Lage der Faserenden werden auf einem Bildschirm dargestellt. Durch Betätigen entsprechender Manipulatoren kann dann von der Bedienungsperson die fluchtende Ausrichtung vorgenommen werden. Dabei dient als Basis für diese Positionierung der infolge des flureszierenden Lichtes sich auf dem Bildschirm gegenüber dem Fasermantel unterschiedlich abbildende Faserkern. Ein solches Verfahren hat vor allem den Nachteil, daß der Kontrast des Faserkerns gegenüber dem Fasermantel nur sehr gering ist und nur durch einen unverhältnismäßig großen Aufwand bei den Abbildungseinrichtungen verbessert werden kann. Derartige Geräte sind deshalb zwar im Fertigungsbereich einsetzbar, nicht jedoch im Feldeinsatz, wo neben geringem Volumen und leichtem Gewicht auch auf eine kostengünstige Ausgestaltung Wert gelegt werden muß. Besonders teure Abbildungssysteme und hochauflösende Kamerasysteme sind in diesem Zusammenhang nicht vertretbar.

Aus der EP-B1 00 30 108 ist eine Abgleicheinrichtung für die Positionierung zweier Lichtwellenleiterenden bekannt, bei der in eines der Lichtwellenleiterenden ein Prüflicht eingeleitet wird, von dem bei völlig exakter Ausrichtung der beiden Lichtwellenleiterenden nicht alles Licht im Kern weitergeleitet wird, sondern ein Teil außerhalb, parallel zur Längsachse des zweiten Lichtwellenleiters an diesem entlang läuft. Zur Erfassung dieses zur Fehlpositionierung proportionalen Anteils des außen verlaufenden Lichtes sind vier sektorförmige fotoempfindliche Elemente in einer Ebene, quer zur Längsachse des Lichtwellenleiters angeordnet, wobei diesen lichtempfindlichen Elementen entsprechende Auswerteschaltungen zugeordnet sind. Aufgrund der von den einzelnen Sektoren herrührenden Meßsignale wird die Größe und die Richtung der Fehlpositionierung bestimmt und eine Nachstellung mittels entsprechender Stellelemente ermöglicht. Der Nachteil einer derartigen Anordnung besteht vor allem darin, daß die lichtempfindlichen sektorförmigen Elemente erst auf den Lichtwellenleiter aufgesteckt werden müssen. Dabei wäre eigentlich zur möglichst genauen Messung ein Schiebesitz der lichtempfindlichen Elemente notwendig, weil jedes seitliche Spiel dieser Elemente sich unmittelbar in einen Meßfehler niederschlägt. Außerdem ist es nachteilig, daß, weil nur die Spitzen der Sektoren im Bereich des Mantels der Lichtwellenleiter liegen, dort auch die geringste Lichtmenge aufgenommen wird. Die Empfindlichkeit der Anordnung nimmt also mit abnehmender Fehlpositionierung zunehmend ab, sodaß ein feiner Endabgleich relativ ungenau durchführbar ist.

Außerdem ist bei diesen Meßverfahren, ähnlich wie bei der aus der DE OS 34 29 947 bekannten Meßanordnung vorausgesetzt, daß unmittelbar vor der Spleißstelle Licht von einem Meßsender in einen Lichtwellenleiter eingekoppelt wird. Dies wird normalerweise dadurch erreicht, daß diesem Lichtwellenleiter eine definierte Krümmung aufgeprägt wird, wobei hinter der Spleißstelle ebenfalls unter Ausnützung dieser Biegemethode das Auskoppeln eines Teils des über die Faserstoßstelle geführten Lichtsignals erfolgt. Der Einsatz derartiger Kopplungsmethoden in Form gebogener Lichtwellenleiter ist eingeschränkt bzw. nicht möglich, z.B. bei stark krümmungsunempfindlichen Fasern, bei Fasern mit einer besonderen Primärbeschichtung (z.B. hermetisch beschichteten Fasern) und immer dann, wenn die Faser nicht frei zugänglich ist, wie z.B. bei vorkonfektionierten Kabeln, sogenannten Pigtails und bei besonders kleinen Absatzlängen.

Der Erfindung liegt die Aufgabe zugrunde, eine Ausrichtung von zwei Faserenden durch Beobachtung der Trennstelle zu schaffen, die in besonders einfacher und wenig aufwendiger Weise eine Erkennung der Fehlpositionierung zuläßt und die eine relativ hohe Genauigkeit beim Vorhandensein von Störgrößen erreichbar macht. Gemäß der Erfindung wird diese Aufgabe bei einem Verfahren der eingangs genannten Art dadurch gelöst, daß für jede der beiden Ebenen in einer zur Faserlängsachse senkrechten Richtung die Intensitätsverteilung für die Abbildung jedes Faserendes getrennt als diskrete Intensitätswerte ermittelt und in digitaler Form in Speichern getrennt festgehalten werden,

daß aus dem Abstand der Maxima der so gespeicherten Intensitätsverteilung jeweils der Versatz zwischen den Faserlängsachsen in den beiden Ebenen durch Rechnung bestimmt wird, und
daß aufgrund dieses Versatzes eine Stellgröße abgeleitet wird, durch welche mit mindestens einer der Halteeinrichtungen die automatische Nachstellung bei mindestens einem der Faserenden bis zu deren fluchtender Ausrichtung für die senkrecht zum Lichtstrahl verlaufende Ebene durchgeführt wird.

Durch die Verwendung der Faserenden als Zylinderlinsen ist es nicht notwendig, den nur wenig kontrastierenden Faserkern zu suchen und abzubilden. Auch ist kein spezifisches UV-Licht erforderlich. Die beiden Intensitätsverteilungen geben relativ genau die Lage der Faserlängsachsen wieder. Auch sind Störeinflüsse, wie sie bei Auswertung nur der Faser-Randbereiche auftreten, weitgehend vermieden.

Die Erfindung betrifft weiterhin eine Einrichtung zur Durchführung des vorstehend genannten Verfahrens, welche dadurch gekennzeichnet ist, daß die Lichtquelle weißes Licht auf die Faserenden richtet,

daß Speichereinrichtungen vorgesehen sind, in denen für jede der beiden Ebenen in einer zur Faserlängsachse senkrechten Richtung die Intensitätsverteilungen für die Abbildung jedes Faserendes getrennt als diskrete Intensitätswerte festgehalten werden,
und daß eine Stelleinrichtung vorgesehen ist, welche aufgrund einer aus dem Abstand der Maxima der gespeicherten Intensitätsverteilungen ermittelten Stellgröße eine Nachstellung mindestens einer die Faserenden aufnehmenden Halteeinrichtung bewirkt.

Sonstige Weiterbildungen bzw. der Erfindung sind in Unteransprüchen wiedergegeben.

Die Erfindungen und ihre Weiterbildungen werden nachfolgend anhand von Zeichnungen näher erläutert. Es zeigen:

Figur 1        teilweise in perspektivischer Darstellung schematisch den Grundaufbau einer Einrichtung zur Durchführung des erfindungsgemäßen Verfahrens,

Figur 2        eine abgewandelte Einrichtung nach Figur 1, welche dazu dient, eine Ausrichtung der Faserenden in zwei Ebenen durchzuführen,

Figur 3 und 4        zwei Intensitätsverteilungen für zwei Lichtwellenleiterenden.

Figur 5        die zugehörige Kreuzkorrelationsfunktion,

Figur 6        die funktionale Abhängigkeit der Kreuzkorrelationsfunktion und zugehöriger Maxima,

Figur 7        eine Möglichkeit zur Ermittlung von Winkelfehlern bei der Ausrichtung der Faserenden,

Figur 8        in schematischer Darstellung und ergänzt durch ein Blockschaltbild den Aufbau einer zur Durchführung des erfindungsgemäßen Verfahrens geeigneten Auswerteeintung,

Figur 9        den Verlauf des Videosignals in analoger und abgetasteter Signalfolge,

Figur 10        die Verteilung von Halbbildern bei spaltenweiser Abtastung der Faserenden und

Figur 11        in schematischer Darstellung eine Abtastung in Richtung der Faserlängsachse,

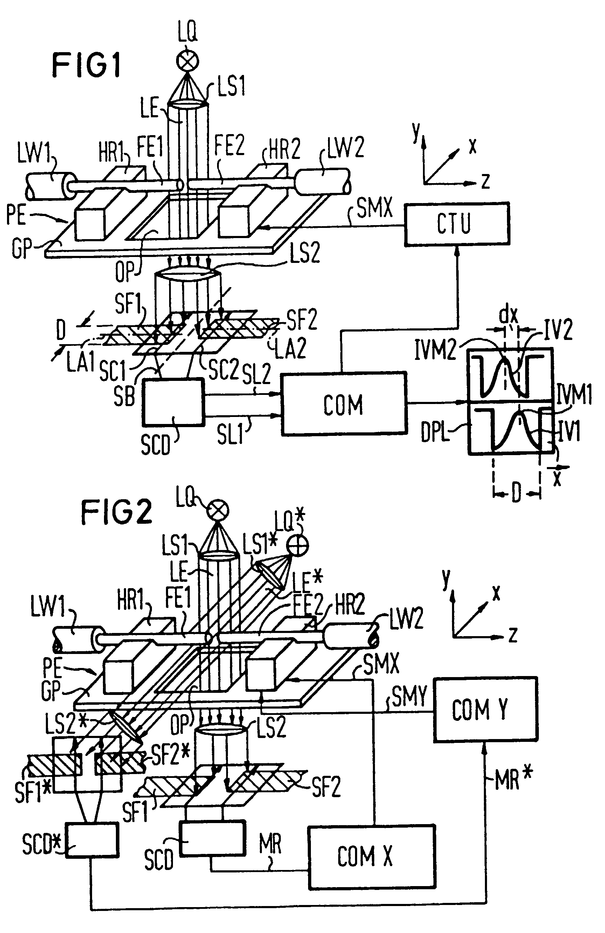

In Figur 1 sind zwei Lichtwellenleiter LW1, LW2 dargestellt, die miteinander, beispielsweise durch Schweißen verbunden werden sollen. Im Endbereich ist die Beschichtung (coating) der Lichtwellenleiter entfernt und die blanken Faserenden FE1, FE2 sind in den entsprechenden Halteeinrichtungen HR1 und HR2 bekannter Bauart (z.B. Manipulatoren) gehalten. Diese Halteeinrichtungen HR1 und HR2 sind auf einer gemeinsamen Grundplatte GP angeordnet, wobei mindestens eine der Halteeinrichtungen, im vorliegenden Beispiel HR2, durch ein entsprechendes Stellglied CTU über eine Steuerleitung SMX in mindestens einer Richtung, d.h. quer zur Faserlängsachse verschiebbar ausgebildet ist.

Im vorliegenden Beispiel ist angenommen, daß eine Bewegung in alle drei Richtungen, nämlich x (Querrichtung, y (nach oben oder unten) und z (in Faserlängsrichtung) möglich ist. Über eine Lichtquelle LQ mit weißem Licht, (insbesondere einer Halogenlampe, einer Leuchtdiode oder eines Lasers) wird mittels einer Linse LS1 ein Lichtstrahl LE auf die Faserenden FE1 und FE2 gerichtet, wobei durch diese Faserenden FE1 und FE2 eine Abschattung des Lichtstrahls LE eintritt. Über eine nachfolgende Linse LS2 werden die Faserenden FE1 und FE2 in ihren Schatten SF1 und SF2 auf eine Fläche geworfen bzw. in einer Bildebene abgebildet, welche zeilenweise abgetastet wird, und zwar jeweils in Richtung quer zu den Faserlängsachsen LA1 und LA2 (d.h. in x-Richtung). Dieser Abtastvorgang ist schematisch durch die Pfeile SC1 und SC2 angedeutet, welche jeweils parallel zur Linie SB verlaufen, welche der Symmetrielinie der Gesamtanordnung in x-Richtung entspricht und die genaue Soll-Stoßstelle der Stirnflächen der Faserenden FE1 und FE2 markiert. Die zeilenmäßige Abtastung entsprechend den Pfeilen SC1 und SC2 wird inkrementell in radialer Richtung vorgenommen (d.h. in x-Richtung), sodaß von der Abtasteinrichtung SCD für jedes der Faserenden FE1 und FE2 eine Intensitätsverteilung in Richtung der x-Achse erhalten wird.

Zweckmäßigerweise wird in unmittelbarer Nähe der Fasertrennstelle, also am stirnseitigen Ende von SF1 und SF2, abgetastet. Man vermeidet dadurch Fehlpositionierungen aufgrund von Winkelfehler durch Verzerrungen in der Optik und/oder Schmutz in den Nuten bzw. auf der Faser im Bereich der Halterungen HR1 und HR2.

Eine mehrfache Abtastung an unterschiedlichen z-Positionen und anschließender Mittelwertbildung kann zur verbesserten Unterdrückung von optischen Störgrößen (lokale Defekte wie z.B. Schmutz o.ä.) und/oder elektrischen Störgrößen genutzt werden. Eine mehrfache Abtastung bei konstantem z und anschließende Mittelwertbildung unterdrückt elektrische Störgrößen und ist deshalb, wie im vorstehend geschilderten Fall, ebenfalls als sinnvoll anzusehen. Auf jeden Fall ist für jedes Schattenbild SF1 und SF2 mindestens ein Abtastvorgang in x-Richtung notwendig.

Über eine Auswerte- und Recheneinrichtung COM können die über die Leitungen SL1 und SL2 übertragenen getrennten Intensitätsinformationen entsprechend den Pfeilen SC1 und SC2 getrennt miteinander verknüpft werden, wobei auch eine Darstellung auf einer entsprechenden Anzeigeeinrichtung DPL möglich ist. Wie schematisch angedeutet, haben die beiden Intensitätsverteilungen IV1 und IV2 in x-Richtung einen Versatz dx, welcher der Fehlpositionierung entspricht und am Abschluß des Positionierungsvorganges, d.h. kurz vor dem Schweißen der Lichtwellenleitenden FE1 und FE2 zu Null gemacht werden soll.

Die Intensitätsverteilung wird nachfolgend anhand der Kurve IV1 im einzelnen erläutert. Außerhalb des Schattenbereiches SF1 (d.h. außerhalb dem Durchmesserbereich D des Faserendes FE1), ist die Intensität IV1 hoch, weil hier das Licht von der Lichtquelle LQ völlig ungehindert sich ausbreiten kann. Sobald der äußere Rand des Schattenbildes SF1 erreicht wird, sinkt die Intensitätsverteilung sehr stark ab, und zwar relativ schlagartig. Über den gesamten, durch die Abschattung erfaßten Bereich D bleibt aber die Intensität IV1 nicht konstant, sondern sie erreicht in der Mitte dieses Schattenbereiches ein Maximum, welches dadurch begründet ist, daß die blanke (d.h. sauber entcoatete) Lichtleitfaser FE1 wie eine Zylinderlinse wirkt. Gegen den anderen Rand der Schattenfläche SF1 tritt symmetrisch wieder ein Abfall der Intensität auf und nach dem Verlassen des Schattenbereiches SF1 steigt die Intensität IV1 wieder abrupt auf den ursprünglichen Wert an. Das Maximum IVM1 im Bereich von D entspricht also genau der Mitte bzw. der Längsachse der Lichtleitfaser FE1. Somit ist es durch die Auswertung des Maximums IVM1 der Intensitätskurve IV1 möglich, die Lage der Längsachse der Lichtleitfaser FE1 zu bestimmen. In gleicher Weise legt das Maximum IVM2 der Intensitätskurve IV2 aus dem Schattenbereich SF2 die Lage der Längsachse der Lichtleitfaser FE2 fest und die Verschiebung der beiden Maxima IVM1 und IVM2 gegeneinander ist proportional dem Versatz dx der Längsachsen der beiden Lichtwellenleiter FE1 und FE2 in x-Richtung. Es ist also lediglich eine Verschiebung einer der Lichtleitfaser, z.B. FE2 so lange durchzuführen, bis die Verschiebung d der Längsachsen zu Null gemacht wird, wodurch dann die Ausrichtung der Lichtleitfasern in der gemessenen Ebene genau fluchtend ist. Diese Ausrichtung kann von einer Bedienungsperson anhand der Betrachtung der beiden Intensitätsverteilungen IV1 und IV2 auf dem Anzeigegerät DPL erfolgen, oder aber automatisch durch Bildung der Differenz d im Rechner COM und Ableitung eines Steuersignals zur Betätigung der Halteeinrichtung HR2 über das Steuergerät CTU.

Es sei darauf hingewiesen, daß die Abtasteinrichtung SCD im vorliegenden Beispiel nur zur besseren Verdeutlichung des Verfahrensablaufes in schematischer Weise dargestellt wurde. Wie im einzelnen bei der Auswertung gearbeitet wird ist näher anhand der Figuren 8 bis 10 beschrieben.

Die Intensitätsverteilungen IV1 und IV2 werden vorteilhaft in noch näher zu beschreibender Weise einer Kreuzkorrelation in dem Rechner COM unterworfen, wobei ein Stellsignal erzeugt wird, welches über das Steuergerät CTU, welche die Verschiebung der Halteeinrichtung HR2 in x-Richtung durchführt, und zwar solange bis der Versatz dx zu Null gemacht ist.

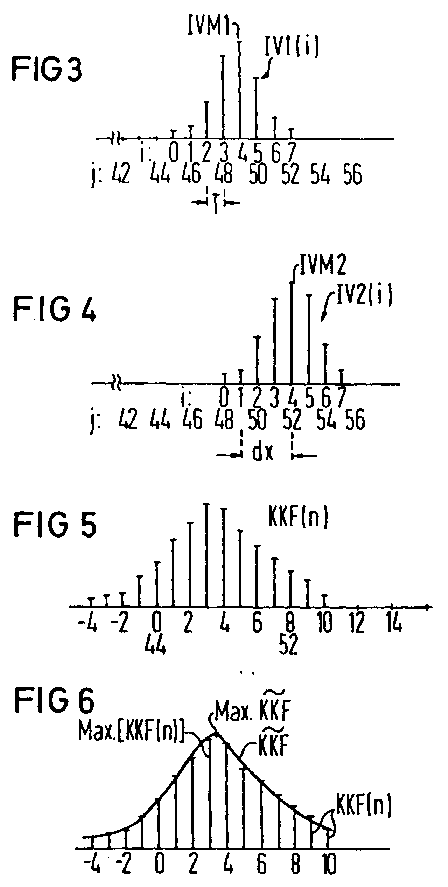

Wenn eine Verschiebung auch in y-Richtung erwünscht ist und ein zweidimensionaler Abgleich erfolgen soll, dann kann entsprechend der Ausführungsform nach Figur 2 gearbeitet werden. Hier sind, was die Lichtquellen und die Auswerteeinrichtungen anbetrifft, diese doppelt vorhanden (Lichtquelle LQ und Lichtquelle LQ*) und ebenso auf der Auswerteseite die entsprechenden Abtasteinrichtungen SCD und SCD* für die Schattenbilder SF1,SF2 sowie SF1* und SF2*. Entsprechend erfolgt die Auswertung der Signale der beiden zueinander senkrecht stehenden Ebenen in getrennten Recheneinrichtungen, die mit COMX und COMY bezeichnet sind.

Über entsprechende Steuerleitungen SMX und SMY wird die Halterung HR2 in x- bzw. y-Richtung solange verschoben, bis die fluchtende Ausrichtung der Faserenden FE1 und FE2 in beiden Ebenen erreicht ist.

Um zu vermeiden, daß zwei Lichtquellen und zwei Abtasteinrichttungen (Videokameras) erforderlich werden, genügt es ggf. auch, die Grundplatte GP um 90 Grad schwenkbar auszubilden, sodaß zunächst, z.B. mit der Lichtquelle LQ und der Abtasteinrichtung SC in der dargestellten Weise die Abweichung in x-Richtung bestimmt wird und nach der Ausrichtung (d.h. dx=0) in dieser Richtung die Grundplatte GP samt den Lichtleitfaserenden FE1 und FE2 um 90 Grad nach oben geklappt wird. Dann liegt die Positioniereinrichtung PE so, daß von der Lichtquelle LQ der seitliche Versatz in der y-Richtung (d.h. dy) bestimmt wird. Anschließend erfolgt der Abgleich in dieser Richtung, sodaß diese Abweichung ebenfalls zu Null gemacht wird.

Der Bediener justiert grob unmittelbar nach dem Einlegen der Faserenden FE1 und FE2 diese in z-Richtung mit Hilfe zweier Linien auf dem Bildschirm, die in einem Abstand von etwa 1 mm symmetrisch zur Linie SB liegen, so daß zwischen den Stirnseiten ein kleiner Spalt verbleibt. Anschließend wird in beiden Hälften der Versatz dx bestimmt und größtenteils ausgeregelt. Danach wird, wie in Fig. 11 schematisch angedeutet, durch den Pfeil SC 12 eine Zeile in z-Richtung ausgelesen und die Intensitätsverteilung IVZ mittels der Abtasteinrichtung SCD bestimmt, wobei im Spaltbereich dz ein ausgeprägtes Maximum auftritt. Daraus kann die genaue Position und Größe des Spaltes zwischen den Stirnflächen der Faserenden FE1,FE2 bestimmt werden. Gegebenenfalls kommen dann erneut zwei Spalten in definiertem Abstand quer zu den Längsachsen LA1 und LA2 abgetastet und so kann noch eine Feinpositionierung in x-Richtung aus den Intensitätsverteilungen dieser beiden Spalten durchgeführt werden.

Wie auch immer das Licht auf den durch die Faserenden gebildeten Glaszylinder auftrifft - das reflektierte Licht muß ein Maximum der Intensität aufweisen, welches am Kreisbogenstück reflektiert wird. Entsprechende Optiken bündeln das stark divergente, reflektierte Licht. Streulichtanteile führen dann zu Störungen, wenn sie zu einer inhomogenen Intensitätsverteilung in Richtung der Faserachsen auf dem abbildenden Sensor führen.

Wie anhand von Figur 1 erläutert wurde, besteht für einen automatisierten Betrieb und für eine automatische Ausrichtung der Lichtleitfasern FE1 und FE2 die Aufgabe, die Differenz d zwischen den Längsachsen zu bestimmen und daraus eine Stellgröße abzuleiten. Einzelheiten hierzu werden anhand der Figuren 3 mit 6 erläutert, wobei dort nur der Intensitätsbereich IV1 und IV2 dargestellt ist, welcher beiderseits des Maximums IVM1 bzw. IVM2 liegt, also derjenige Bereich, welcher durch die Funktion der Lichtleitfaser als Zylinderlinse verursacht ist. Wie noch näher beschrieben wird, liegen in entsprechenden digitalisierten Speichern die i = 0 bis i = N - 1 festgehaltenen N Abtastwerte aus einem oder mehreren Abtastvorgängen entsprechend den Pfeilen SC1 und SC2 in Figur 1 vor. Die Unterdrückung der hohen seitlichen Schultern, welche durch an den Lichtleitfasern FE1 und FE2 vorbeilaufendes Licht erzeugt wird, kann in einfacher Weise dadurch erfolgen, daß erst Werte zugelassen werden, nachdem der erste steile Flankenabfall erfolgt ist und auch diejenigen Werte, welche dann nach dem zweiten Flankenanstieg auftreten, wieder unterdrückt werden. Es ist auch möglich, den steilen Abstieg bzw. Anstieg am Faserrand gleich direkt zur Bestimmung der Mißweisung herauszuziehen. Eine solche steile Flanke ist an sich einfacher zu erfassen als ein Maximum wie bei IVM1 und IVM2.

Wenn beim Positionieren der Faserenden nach ihrem Außendurchmesser nur die Information der Bildpunkte am oberen und unteren Rand des Faserbildes genutzt wird, dann verhalten sich Schmutz, Faserausbrüche oder dergleichen an diesen Stellen im Regelkreis wie Störgrößen. Im allgemeinen überlagern sich diese mit elektrischen Störeinflüßen bei der Auswertung des Videobildes und so kommt es je nach Intensität und Größe der Fehlstelle im Videobild zu Fehlpositionierungen und damit evt1. zu höheren Spleißdämpfungen.

Werden zur Berechnung der Kreuzkorrelationsfunktion auch die Flanken mit herangezogen, so wäre unter dem Ausschluß von Störungen auf der Faseroberfläche sogar eine Erhöhung der Genauigkeit bei der Erfassung von dx denkbar. Die größere Anzahl der Meßwerte führt aber auf z.T. erheblich längere Rechenzeiten.

Der Abstand der (quantisierten) Maxima IVM1 und IVM2 von Fig. 3 und Fig. 4 beträgt 3 Spaltenbreiten (Abtastschritte). Man könnte mit diesen Werten bereits eine angenäherte Ausrichtung vornehmen. Mittels einer Kreuzkorrelation läßt sich die Genauigkeit erheblich erhöhen.

Die diskreten Werte (Spaltenelemente) der Intensitätsverteilungen von IVM1 (Figur 3) und IVM2 (Figur 4) der Faserschatten SF1 und SF2 werden einer Kreuzkorrelationsfunktion (KKF) unterworfen, also gebildet

KKF(n) von IV1 (i) und IV2 (i).

Dabei bedeutet N: Anzahl der Spaltenelemente
n: n-ter Wert (im Beispiel nach Fig. 5
n = -4 ..... +10)

Bei N-Spaltenelementen für den radialen Versatz dx zwischen den Achsen der Lichtwellenleiterenden FE1 und FE2 gilt

$$dx = n[\text{Max } (KKF(n))]. \tag{1}$$

Im Beispiel ist n Max (KKF(n)) der 3. Wert, an dem die Funktion KKF (n) maximal wird.

Max (KKF(n)) ist der Maximalwert der Kreuzkorrelationsfunktion und n[Max (KKF(n))] der zugehörige Ort. Die Kreuzkorrelationsfunktion KKF(n) der Funktionen IV1(i) und IV2(i) ist definiert durch

$$KKF(n) = T \sum_{i=0}^{N-1} IV1(i) * IV2(n+i). \qquad (2)$$

T ist der Abstand zweier benachbarter Intensitätswerte. Von praktischem Interesse ist, die diskrete Funktion KKF(n) durch eine funktionale Abhängigkeit (z.B. Polynominterpolation) anzunähern, da die Auflösung von dx durch den Abstand zweier Intensitätswerte begrenzt wird. Ist $\widetilde{KKF}$ die funktionale Abhängigkeit, so gilt

$$\widetilde{dx} = n \left[ Max \ (\widetilde{KKF}) \right]. \qquad (3)$$

Das berechnete Versatz $\widetilde{dx}$ wird vom Mikrocomputer CPU in bekannter Weise in ein geeignetes Signal zur Ansteuerung des Stellgliedes SG1 an der Faserhalterung FH1 umgewandelt. Störgrößen wie z.B. Hysterese, Umkehrspiel o.ä. der Stellglieder können durch iteratives Anfahren der optimalen Position minimiert werden.

Die Kreuzkorrelationsfunktion KKF(n) ist in Figur 5 dargestellt und zwar für das angegebene Beispiel mit N = 8, dabei ist, wie unter der jeweiligen Abszisse der Figuren 3 und 4 angegeben ist, mit j die (absolute) Spaltenzahl bezeichnet, d.h. in der Zählung der Ink grementschritte beginnend beim Abtastvorgang entsprechend SC1 und SC2 in Figur 1 an einem Ende des Bildrandes und durchlaufend bis zum anderen. Im vorliegenden Beispiel ist angenommen, daß der gesamte erfaßte Bereich zwischen den Spaltennummern 42 und 56 liegt, während für die Kreuzkorrelationsfunktion die Spaltennummern 44 bis 52 verwendet werden (N=8). Wie aus den Figuren 3 und 4 ersichtlich ist, ist dx der Abstand zwischen zwei Maxima IVM1 und IVM2.

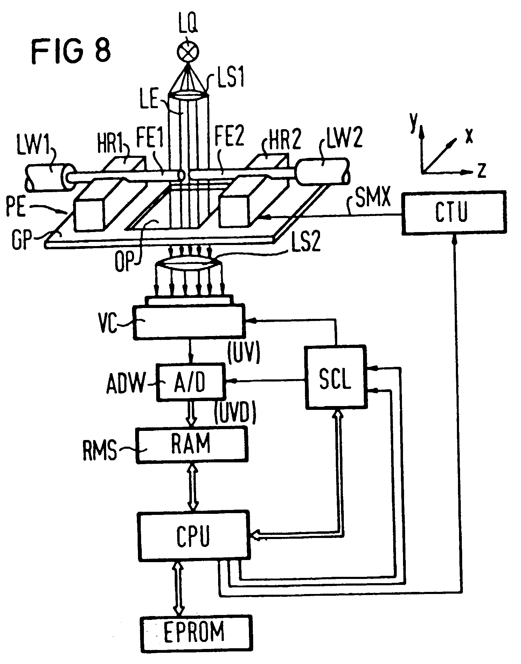

Die Figur 6 zeigt eine funktionale Abhängigkeit KKF von KKF(n) und zugehörige Maxima. Der zu kompensierende laterale Versatz dx beträgt im Beispiel ca. 3,4 (relative Einheit mit T = 1). Zweckmäßigerweise wird die diskrete Kreuzkorrelation KKF(n) durch eine funktionale Abhängigkeit KKF angenähert, wegen der begrenzten Auflösung von dx durch den Werteabstand T. Im Beispiel wird vorgeschlagen, nach der weit verbreiteten Methode der kleinsten Quadrate vorzugehen. Formal bedeutet dies die Gleichung:

$$\wp = \sum_{m=0}^{N-1} \left[ (\widetilde{KKF}(n) - KKF(n)) \right]^2$$

so zu lösen, daß φ ein Minimum ist. Daraus bestimmt sich $\widetilde{KKF}$ eindeutig aus KKF(n). ($\widetilde{KKF}$ (n) ist die Funktion $\widetilde{KKF}$ berechnet für den Wert n).

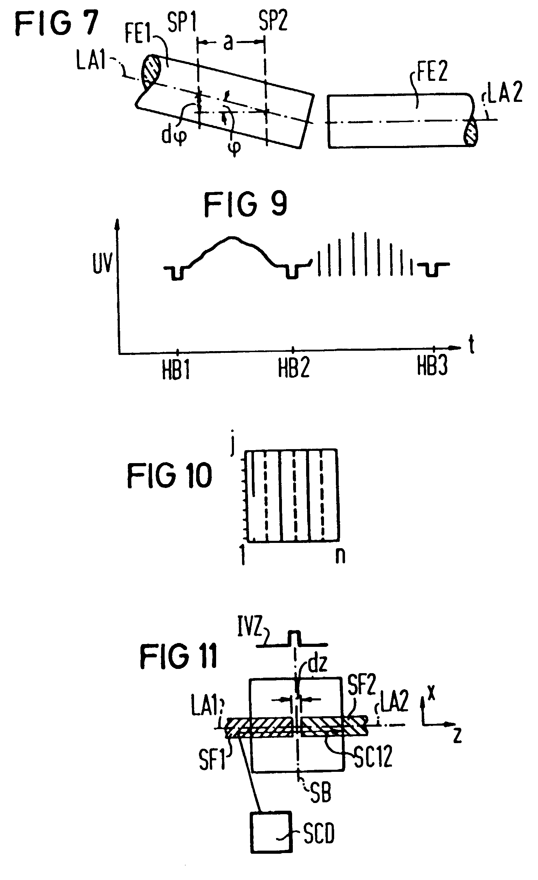

Figur 7 zeigt zwei Faserenden FE1 und FE2 in stark vergrößerter Darstellung, wobei diese zusätzlich einen Winkelfehler zwischen ihren Längsachsen LA1 und LA2 aufweisen. Wenn bei der Faser FE1 (bzw. bei deren Schatten) zwei Abtastungen (entsprechend dem Pfeil SC1 in Figur 2) vorgenommen werden und zwar in einem Abstand a, so gilt für die beiden Spalten SP1 und SP3 und dem Winkelfehler φ die Beziehung $\varphi = \arctan \frac{d\varphi}{a}$. Dabei ist dφ der Versatz, welcher sich aus dem Abstand a zwischen aufeinanderfolgenden Spalten SP1 und SP2 ergibt.

Übersteigt der Wert φ einen festgelegten Wert, z.B. φ max, dann wird der Positioniervorgang mit einer Fehlermeldung abgebrochen ebenso wird der Spleißvorgang abgebrochen. Es muß dann mindestens eine der Fasern neu eingelegt werden.

Die Anordnung nach Figur 8 zeigt in vereinfachter und schematischer Darstellung den Aufbau nach Figur 1 mit den Blockschaltbildern der verschiedenen Steuer- und Auswertebausteine. Unterhalb der Grundplatte GP ist im Bereich der Öffnung OP eine Videokamera VC vorgesehen, welche, wie durch gestrichelte Linien angedeutet (entsprechend den Pfeilen SC1 und SC2 in Figur 1) in x-Richtung, das auf den Sensor der Kamera VC fallende Bild zeilenmäßig abtastet, wobei ein analoges Videosignal UV entsteht, wie es in Figur 9 in Abhängigkeit von der Zeit t dargestellt ist.

Figur 10 zeigt die Abtastung, und zwar in der üblichen Weise mit einer Aufeinanderfolge von Halbbildern, wobei die gestrichelten Linien das erste Halbbild und die punktierten Linien das zweite Halbbild darstellen. Durch diesen Abtastvorgang entsteht das analoge Signal UV entsprechend Figur 9, wobei die Einschnitte HB1,HB2,HB3 jeweils das Ende einer Zeile eines Halbbildes markieren. Wie im rechten Teil der Figur 9 dargestellt ist, werden dann aus dem so gewonnenen Analogsignal durch eine Abtast- und Halteschaltung die einzelnen Abtastproben entnommen (entsprechend den Amplitutenwerten nach Figur 3 bzw. Figur 4). Die so gewonnenen analogen Signalproben von UV werden einem A/D-Wandler ADW zugeführt und die einzelnen Abtastproben des digitalisierten Videosignals UVD, (entsprechend den quantisierten Werten der Figur 3 bzw. 4), werden nacheinander in einem RAM-Speicher RMS eingelesen. Bei dem Speicher RMS handelt es sich um einen Schreib- Lesespeicher, welcher die Daten des digitalisierten Videosignals und zwar entsprechend den Abtastwerten der Figuren 3 und 4 enthält.

Die Speichereinheit RMS ist mit dem Rechenteil CPU der Auswerteeinrichtung verbunden, welcher seinerseits von einem EPROM angesteuert wird, welches den Meßvorgang in Befehlsform enthält, d. h. das Programm zur Steuerung des gesamten Verfahrensablaufs und zur Auswertung der Daten. Dieses ist für alle Abtastvorgänge bei aufeinanderfolgenden Spleißvorgängen stets das gleiche.

Die Rechen- und Steuereinheit CPU startet den gesamten Vorgang und gibt nacheinander die Nummern (j) der einzelnen Spalten, in denen abgetastet wird aus, und zwar zunächst an eine Synchronisations- und Steuerlogic SCL. Diese Synchronisations- und Steuerlogic SCL startet den A/D-Wandler zu Beginn des Abtastvorganges und startet auch den Beginn des eigentlichen Abtastvorganges bei der Videokamera VC. Auf diese Weise werden dann spaltenmäßig die Abtastwerte in x-Richtung in den Speicher RMS eingeschrieben, wobei nach Abschluß des Abtastvorganges, d.h. wenn sowohl die digitalisierten Werte der Funktion nach Figur 3 und nach Figur 4 vorliegen, anschließend die Kreuzkorrelation entsprechend Figur 5 bzw. Figur 6 in der Recheneinheit CPU durchgeführt wird. Aufgrund dieses Ergebnisses steuert die Stelleinrichtung CPU die Halteeinrichtung HR2 an, mit der Maßgabe, daß eine möglichst genaue Ausrichtung (dx=0) durchgeführt wird.

Ein bei einer Abtastung entstehendes Halbbild (vgl. Figur 10) enthält dabei nur die ungeraden Zeilen, während das zweite Halbbild die geraden Zeilen wiedergibt. Die Anzahl der Zeilen ist genormt (CCITT oder NTSC), die Information einer Zeile wird jeweils unterteilt in n-Spalten und d.h. die Bildinformation wird dargestellt als Matrix mit n-Zeilen und j-Spalten. Das Ergebnis einer einzigen Zeile mit n-Spalten zeigen die Figuren 3 und 4. Jeder der in Figur 3 und 4 dargestellten Abtastwerte gibt somit den Intensitätswert in einem bestimmten eng begrenzten Fleck, z.B. der Größe 0,001 mm x 0,001 mm der gesamten Fläche wieder.

Die Recheneinheit CPU ermittelt die zu digitalisierende Zeile oder Spalte und teilt der Synchronisations- und Steuerlogik SCL mit, ob eine Zeile oder eine Spalte zu digitalisieren ist. Sie teilt weiterhin mit, ob das erste oder zweite usw. Halbbild digitalisiert wird und sie übergibt weiterhin die Nummer der jeweiligen Zeile bzw. Spalte.

Die Synchronisation- und Steuerlogic SCL starte dann zu dem richtigen Zeitpunkten die j-Spalten oder n-Zeilen und setzt außerdem die A/D-Wandlung in Gang. Die digitalisierten Werte der Zeile bzw. der Spalte liegen danach, d. h. am Ende des Meßvorganges in der Speichereinheit RMS vor und können von der CPU entsprechend ausgewertet werden und zwar nach der Kreuzkorrelationsfunktion entsprechend den Figuren 5 und 6.

Es ist zweckmäßig, wenn Störgrößen wie Hysterese, Umlenkspiel oder dergleichen bei den Verstellelementen durch Wiederholen des Positioniervorganges im Sinn eines iterativen Anfahrens der optimalen Faserposition minimiert werden.

Es ist auch möglich, durch Strahlumlenkung eine Abbildung der Faserenden in x- und y-Richtung übereinander auf dem Bildsensor durchzuführen, wobei jeweils eine Spalte die Intensitätsverteilung jeweils eines Faserendes in x-Richtung und zusätzlich in y-Richtung enthält. Beide Intensitätsverteilungen werden nacheinander in der Recheneinheit mit den zugehörigen Intensitätsverteilungen der gegenüberliegenden Faser kreuzkorreliert.

Es ist zweckmäßig, daß nach Ausrichtung der Faserenden FE1,FE2 in mindestens einer Richtung ein Spleißvorgang, vorzugsweise in Form eines Schweißvorganges, durchgeführt wird und daß nach der Beendigung des Spleißvorganges der Abtastvorgang wiederholt wird und ein etwa verbleibender lateraler Versatz oder ein Winkelfehler für die Beurteilung der Güte der Spleißverbindung herangezogen und entsprechend angezeigt wird. Bei Mehrfachspleißgeräten wird ein lateraler Versatz und ggf. ein Winkelfehler für jedes verschweißte Faserpaar berechnet. Die Intensitätsverteilung wird zweckmäßig möglichst nahe bei den Stirnseiten der Faserenden SF1,SF2 bestimmt.

Vielfach ist es vorteilhaft, wenn mehrere Abtastungen zur Bestimmung der Intensitätsverteilung an der gleichen Stelle (z = const.) der Längsachse LA1,LA2 der Faserenden FE1,FE2 durchgeführt werden. Es ist auch möglich, mehrere Abtastungen zur Bestimmung der Intensitätsverteilung an verschiedenen Stellen (z = nicht const.) der Längsachse LA1,LA2 der Faserenden FE1,FE2 durchzuführen.

**Patentansprüche**

1. Verfahren zur fluchtenden Ausrichtung zweier jeweils in einer Halteeinrichtung (HR1, HR2) gehaltener Faserenden (FE1, FE2) von Lichtwellenleitern, wobei die sich als Zylinderlinsen verhaltenden Faserenden mittels eines Lichtstrahls (LE) so beleuchtet und angeordnet werden, daß ein Maximum der Intensität in der Mitte eines Schattenbildes der Faserenden gebildet wird, und wobei ein so erzeugtes Bild der Faserenden (FE1, FE2) mit dem Bildsensor einer Videokamera abgetastet und die Position der Faserenden in zwei zueinander und zum Lichtstrahl senkrechten Ebenen bestimmt wird,
**dadurch gekennzeichnet**,

daß für jede der beiden Ebenen in einer zur Faserlängsachse senkrechten Richtung die Intensitätsverteilung für die Abbildung jedes Faserendes getrennt als diskrete Intensitätswerte ermittelt und in digitaler Form in Speichern getrennt festgehalten werden,
daß aus dem Abstand der Maxima der so gespeicherten Intensitätsverteilung jeweils der Versatz zwischen den Faserlängsachsen in den beiden Ebenen durch Rechnung (COM X, COM Y) bestimmt wird, und
daß aufgrund dieses Versatzes eine Stellgröße abgeleitet wird, durch welche mit mindestens einer der Halteeinrichtungen (z.B. HR2) die automatische Nachstellung bei mindestens einem der Faserenden (FE1, FE2) bis zu deren fluchtender Ausrichtung für die senkrecht zum Lichtstrahl (LE) verlaufende Ebene durchgeführt wird.

2. Verfahren nach Anspruch 1, **dadurch gekennzeichnet**, daß die Faserenden (FE1,FE2) mit weißem Licht beleuchtet werden.

3. Verfahren nach einem der vorhergehenden Ansprüche, **dadurch gekennzeichnet**, daß die Beleuchtung der Faserenden (FE1,FE2) mittels einer Halogenlampe durchgeführt wird.

4. Verfahren nach einem der Ansprüche 1 oder 2, **dadurch gekennzeichnet**, daß die Beleuchtung der Faserenden (FE1,FE2) mit einer Leuchtdiode durchgeführt wird.

5. Verfahren nach einem der Ansprüche 1 oder 2, **dadurch gekennzeichnet**, daß die Beleuchtung der Faserenden (FE1,FE2) mit einem Halbleiterlaser durchgeführt wird.

6. Verfahren nach einem der vorhergehenden Ansprüche, **dadurch gekennzeichnet**, daß die Abbildung jedes Faserendes (FE1, FE2) mindestens einmal quer zur Faserlängsachse (LA1,LA2) entlang einer Zeile abgetastet wird,

daß innerhalb jeder Zeile spaltenweise diskrete Intensitätswerte ermittelt und in einer Speichereinrichtung festgehalten werden,
daß die so zeilenweise für beide Faserenden (FE1,FE2) erhaltene, spaltenweise quantisierte Intensitätsverteilung zur Auswertung für beide Faserenden (FE1,FE2) getrennt bereitgestellt wird und daß aus den Unterschieden in der spaltenweisen Lage der Intensitätsverteilungen der beiden Faserenden der Fehler in der Ausrichtung (dx) bestimmt und die Nachstellung mindestens eines Faserendes (z.B. FE2) zur fluchtenden Ausrichtung vorgenommen wird.

7. Verfahren nach Anspruch 6, **dadurch gekennzeichnet**, daß die beiden von den beiden Faserenden (FE1,FE2) erhaltenen getrennten Intensitätsverteilungen einer Kreuzkorrelation unterworfen werden.

8. Verfahren nach Anspruch 7, **dadurch gekennzeichnet**, daß die diskrete Kreuzkorrelationsfunktion durch eine funktionale Abhängigkeit, z.B. Polynominterpolation, angenähert wird.

9. Verfahren nach einem der vorhergehenden Ansprüche, **dadurch gekennzeichnet**, daß durch Auswertung von zwei in Richtung der Faserlängsachse gegeneinander versetzten zeilenweisen Abtastungen jedes Faserendes ein Winkelfehler erkannt wird.

10. Verfahren nach einem der vorhergehenden Ansprüche, **dadurch gekennzeichnet**, daß Störgrößen wie Hysterese, Umlenkspiel oder dergleichen bei den Verstellelementen durch Wiederholen des Positioniervorganges im Sinn eines iterativen Anfahrens der optimalen Faserposition minimiert werden.

11. Verfahren nach einem der vorhergehenden Ansprüche, **dadurch gekennzeichnet**, daß in einem zweiten Meßvorgang senkrecht zur ersten Betrachtungsebene (x) eine Auswertung der Ausrichtung der Faserenden (FE1,FE2) senkrecht zur ersten Betrachtungsebene durchgeführt wird und auch in dieser zweiten Ebene (y) eine Nachstellung durchgeführt wird.

12. Verfahren nach Anspruch 11, **dadurch gekennzeichnet**, daß durch Strahlumlenkung eine Abbildung der Faserenden in x- und y-Richtung übereinander auf dem Bildsensor durchgeführt wird,

daß jeweils eine Zelte die Intensitätsverteilung jeweils eines Faserendes in x-Richtung und zusätzlich in y-Richtung enthält, daß beide Intensitätsverteilungen nacheinander in einer Recheneinheit mit den zugehörigen Intensitätsverteilungen der gegenüberliegenden Faser kreuzkorreliert werden.

13. Verfahren nach einem der vorhergehenden Ansprüche, **dadurch gekennzeichnet**, daß nach Ausrichtung der Faserenden (FE1,FE2) in mindestens einer Richtung ein Spleißvorgang, vorzugsweise in Form eines Schweißvorganges, durchgeführt wird und
daß nach der Beendigung des Spleißvorganges der in den vorstehenden Ansprüchen gekennzeichnete Abtastvorgang wiederholt wird und ein etwa verbleibender lateraler Versatz oder ein Winkelfehler für die Beurteilung der Güte der Spleißverbindung herangezogen wird.

14. Verfahren nach Anspruch 13, **dadurch gekennzeichnet**, daß bei Mehrfachspleißgeräten ein lateraler Versatz und gegebenenfalls ein Winkelfehler für jedes verschweißte Faserpaar berechnet wird.

15. Verfahren nach einem der vorhergehenden Ansprüche, **dadurch gekennzeichnet**, daß die Intensitätsverteilung möglichst nahe bei den Stirnseiten der Faserenden (SF1,SF2) bestimmt wird.

16. Verfahren nach einem der vorhergehenden Ansprüche, **dadurch gekennzeichnet**, daß mehrere Abtastungen zur Bestimmung der Intensitätsverteilung an der gleichen Stelle der Längsachse (LA1,LA2) der Faserenden (FE1,FE2) durchgeführt werden.

17. Verfahren nach Anspruch 1 bis 17, **dadurch gekennzeichnet**, daß mehrere Abtastungen zur Bestimmung der Intensitätsverteilung an verschiedenen Stellen der Längsachse (LA1,LA2) der Faserenden (FE1,FE2) durchgeführt werden.

18. Verfahren nach einem der vorhergehenden Ansprüche, **dadurch gekennzeichnet**, daß eine Abtastung der Abbildung der Faserenden in Richtung ihrer Faserlängsachse (LA1,LA2) durchgeführt wird,

daß aus der zugehörigen Intensitätsverteilung die Größe des Spaltes (dz) zwischen beiden Faserenden bestimmt wird und
daß aufgrund dieser Größe die Nachstellung der Faserenden in Längsrichtung (z) der Faserenden (FE1,FE2) durchgeführt wird.

19. Einrichtung zur Durchführung des Verfahrens nach einem der vorhergehenden Ansprüche, wobei die als Zylinderlinsen sich verhaltenden Faserenden mittels einer Lichtquelle (LQ) beleuchtet werden und ein so erzeugtes Schattenbild der Faserenden mittels einer Videokamera abgetastet wird,
**dadurch gekennzeichnet**,

daß die Lichtquelle (LQ) weißes Licht auf die Faserenden (FE1, FE2) richtet,
daß Speichereinrichtungen vorgesehen sind, in denen für jede der beiden Ebenen in einer zur Faserlängsachse senkrechten Richtung die Intensitätsverteilungen für die Abbildung jedes Faserendes getrennt als diskrete Intensitätswerte festgehalten werden,
und daß eine Stelleinrichtung vorgesehen ist, welche aufgrund einer aus dem Abstand der Maxima der gespeicherten Intensitätsverteilungen ermittelten Stellgröße eine Nachstellung mindestens einer die Faserenden aufnehmenden Halteeinrichtung (z.B. HR2) bewirkt.

## Claims

1. Method for the true alignment of two fibre ends (FE1, FE2), respectively held in a holding device (HR1, HR2), of optical fibres, the fibre ends, which behave as cylindrical lenses, being illuminated in such a way by means of a light beam (LE) and arranged in such a way that a maximum in the intensity is formed in the middle of a shadow image of the fibre ends, an image of the fibre ends (FE1, FE2) thus generated being scanned by the image sensor of a video camera, and the position of the fibre ends being determined in two planes which are perpendicular to one another and to the light beam, characterized in that for each of the two planes the intensity distribution is determined separately as discrete intensity values in a direction perpendicular to the fibre longitudinal axis for the imaging of each fibre end, and is retained separately in digital form in memories, in that the offset between the fibre longitudinal axes in the two planes is determined by calculation (COM X, COM Y) in each case from the separation of the maxima of the intensity distribution thus stored, and in that this offset is used to derive a manipulated variable by means of which using at least one of the holding devices (for example HR2) the automatic readjustment is carried out for the plane extending perpendicular to the light beam (LE) in the case of at least one of the fibre ends (FE1, FE2) as far as their true alignment.

2. Method according to Claim 1, characterized in that the fibre ends (FE1, FE2) are illuminated with white light.

3. Method according to one of the preceding claims, characterized in that the illumination of the fibre ends (FE1, FE2) is carried out by means of a halogen lamp.

4. Method according to one of Claims 1 or 2, characterized in that the illumination of the fibre ends (FE1, FE2) is carried out by a light-emitting diode.

5. Method according to one of Claims 1 or 2, characterized in that the illumination of the fibre ends (FE1, FE2) is carried out by a semiconductor laser.

6. Method according to one of the preceding claims, characterized in that the image of each fibre end (FE1, FE2) is scanned along a row at least once transverse to the fibre longitudinal axis (LA1, LA2), in that column-wise discrete intensity values are determined within each row and are retained in a storage device, in that the column-wise quantized intensity distribution thus obtained in a row-wise fashion for the two fibre ends (FE1, FE2) is provided separately for the two fibre ends (FE1, FE2) for evaluation purposes, and in that the differences in the column-wise position of the intensity distributions of the two-fibre ends are used to determine the error in the alignment (dx) and the readjustment of at least one fibre end (for example FE2) is undertaken for the purpose of true alignment.

7. Method according to Claim 6, characterized in that the two separate intensity distributions obtained from the two fibre ends (FE1, FE2) are subjected to cross-correlation.

8. Method according to Claim 7, characterized in that the discrete cross-correlation function is approximated by a functional relationship, for example polynomial interpolation.

9. Method according to one of the preceding claims, characterized in that an angular error is detected by evaluating two row-wise scannings of each fibre end which are mutually offset in the direction of the fibre longitudinal axis.

10. Method according to one of the preceding claims, characterized in that disturbing variables such as hysteresis, deflection play or the like are minimized in the case of the adjusting elements by repeating the positioning process for the purpose of an iterative approach to the optimum fibre position.

11. Method according to one of the preceding claims, characterized in that an evaluation of the alignment of the fibre ends (FE1, FE2) perpendicular to the first viewing plane (x) is carried out in a second measurement operation perpendicular to the first viewing plane, and a readjustment is carried out in this second plane (y) as well.

12. Method according to Claim 11, characterized in that the fibre ends are imaged one above another in the x- and y-directions on the image sensor by beam deflection, in that in each case one row contains the intensity distribution of in each case one fibre end in the x-direction and, in addition, in the y-direction, and in that the two intensity distributions are cross-correlated successively in a processor with the associated intensity distributions of the opposite fibre.

13. Method according to one of the preceding claims, characterized in that after alignment of the fibre ends (FE1, FE2) in at least one direction a splicing operation is carried out, preferably in the form of a welding operation, and in that after the termination of the splicing operation the scanning operation characterized in the preceding claims is repeated and any lateral offset remaining or an angular error is used to assess the quality of the spliced joint.

14. Method according to Claim 13, characterized in that in the case of multiple splicers a lateral offset and, as the case may be, an angular error are calculated for each welded fibre pair.

15. Method according to one of the preceding claims, characterized in that the intensity distribution is determined as near the end faces of the fibre ends (SF1, SF2) as possible.

**16.** Method according to one of the preceding claims, characterized in that a plurality of scannings are carried out in order to determine the intensity distribution at the same point on the longitudinal axis (LA1, LA2) of the fibre ends (FE1, FE2).

**17.** Method according to Claims 1 to 17, characterized in that a plurality of scannings are carried out in order to determine the intensity distribution at different points on the longitudinal axis (LA1, LA2) of the fibre ends (FE1, FE2).

**18.** Method according to one of the preceding claims, characterized in that scanning of the image of the fibre ends is carried out in the direction of their fibre longitudinal axis (LA1, LA2), in that the size of the gap (dz) between the two fibre ends is determined from the associated intensity distribution, and in that the read-justment of the fibre ends in the longitudinal direction (z) of the fibre ends (FE1, FE2) is carried out on the basis of this size.

**19.** Device for carrying out the method according to one of the preceding claims, the fibre ends which behave as cylindrical lenses being illuminated by means of a light source (LQ) and a shadow image thus generated of the fibre ends being scanned by means of a video camera, characterized in that the light source (LQ) directs white light onto the fibre ends (FE1, FE2), in that storage devices are provided in which for each of the two planes the intensity distributions are retained separately as discrete intensity values in a direction perpendicular to the fibre longitudinal axis for the imaging of each fibre end, and in that a control device is provided which effects a read-justment of at least one holding device (for example HR2) receiving the fibre ends on the basis of a manipulated variable determined from the separation of the maxima of the stored intensity distributions.

**Revendications**

**1.** Procédé pour aligner deux extrémités (FE1, FE2) de fibres optiques maintenues chacune dans un dispositif (HR1, HR2) de maintien, les extrémités qui se comportent comme des lentilles cylindriques étant éclairées au moyen d'un rayonnement (LE) lumineux de manière qu'un maximum de l'intensité soit formé au centre d'une silhouette des extrémités de fibres, et une image ainsi produite des extrémités (FE1, FE2) de fibres étant échantillonnée par le détecteur d'image d'une caméra vidéo et la position des extrémités de fibres étant déterminée dans deux plans perpendiculaires l'un à l'autre et au rayonnement lumineux, caractérisé en ce que, pour chacun des deux plans, on détermine, dans une direction perpendiculaire à l'axe longitudinal de la fibre, la répartition d'intensité destinée à la représentation de chaque extrémité de fibre séparément comme valeurs discrètes d'intensité et on la mémorise séparément sous forme numérique dans des mémoires, en ce que, à partir de la distance des maxima de la répartition d'intensité ainsi mémorisée, on détermine par calcul (COM X, COM Y) le décalage entre les axes longitudinaux de fibres dans les deux plans, et en ce que, sur la base de ce décalage, on déduit une grandeur réglante par laquelle on effectue pour le plan s'étendant perpendiculairement au rayonnement (LE) lumineux, par au moins un (par exemple HR2) des dispositifs de maintien, le réglage automatique pour au moins une des extrémités (FE1, FE2) de fibres, jusqu'à ce qu'elle soit orientée en alignement.

**2.** Procédé suivant la revendication 1, caractérisé en ce que les extrémités (FE1, FE2) de fibres sont éclairées par de la lumière blanche.

**3.** Procédé suivant une des revendications précédentes, caractérisé en ce que l'on effectue l'éclairage des extrémités (FE1, FE2) de fibres au moyen d'une lampe à halogène.

**4.** Procédé suivant la revendication 1 ou 2, caractérisé en ce que l'on effectue l'éclairage des extrémités (FE1, FE2) de fibres par une diode luminescente.

**5.** Procédé suivant la revendication 1 ou 2, caractérisé en ce que l'on effectue l'éclairage des extrémités (FE1, FE2) de fibres par un laser à semiconducteur.

**6.** Procédé suivant l'une des revendications précédentes, caractérisé en ce que l'on échantillonne la représentation de chaque extrémité (FE1, FE2) de fibres au moins une fois transversalement à l'axe (LA1, LA2) longitudinal de fibre, suivant une ligne, en ce que l'on détermine à l'intérieur de chaque ligne, par colonne, des valeurs discrètes d'intensité et on les mémorise dans un dispositif de mémorisation, en ce que la répartition d'intensité ainsi obtenue par ligne, quantifiée par colonne, est mise à disposition séparément pour les deux extrémités (FE1, FE2) de fibres, et en ce que, à partir des différences de position par colonne des répartitions d'intensité des deux extrémités de fibres, on détermine l'erreur d'orientation (dx) et on procède au réglage d'au moins une extrémité de fibre (par exemple FE2) pour obtenir l'orientation alignée.

7. Procédé suivant la revendication 6, caractérisé en ce que les deux répartitions d'intensité séparées obtenues des deux extrémités (FE1, FE2) de fibres sont soumises à une corrélation croisée.

8. Procédé suivant la revendication 7, caractérisé en ce que la fonction de corrélation croisée est approchée par une relation fonctionnelle, par exemple par une interpolation polynomiale.

9. Procédé suivant l'une des revendications précédentes, caractérisé en ce que, en exploitant deux échantillonnages par ligne, décalés l'un par rapport à l'autre dans la direction de l'axe longitunal des fibres, de chaque extrémité de fibre, on identifie une erreur angulaire.

10. Procédé suivant l'une des revendications précédentes, caractérisé en ce que des grandeurs parasites, comme une hystérésis, un jeu de renvoi ou analogues des éléments de réglage, sont minimisées en répétant l'opération de mise en position, en approchant par itération la position optimale des fibres.

11. Procédé suivant l'une des revendications précédentes, caractérisé en ce que, lors d'une deuxième opération de mesure perpendiculaire au premier plan (x) d'observation, on effectue une exploitation de l'orientation des extrémités (FE1, FE2) de fibres perpendiculairement au premier plan d'observation et on effectue aussi dans ce deuxième plan (y) un réglage.

12. Procédé suivant la revendication 11, caractérisé en ce que l'on effectue par déviation du rayonnement une reproduction des extrémités de fibre dans la direction x et dans la direction y de manière superposée sur le détecteur d'image, et en ce qu'une ligne contient la répartition d'intensité d'une extrémité de fibre dans la direction x et de plus dans la direction y, en ce que les deux répartitions d'intensité sont corrélées en croix avec les répartitions d'intensité associées de la fibre opposée successivement dans une unité de calcul.

13. Procédé suivant l'une des revendications précédentes, caractérisé en ce que, après une orientation des extrémités (FE1, FE2) de fibres dans au moins une direction, on effectue une opération de formation d'épissure, de préférence sous la forme d'une opération de soudage, et en ce que, une fois achevée cette opération , on répète l'opération d'échantillonnage caractérisée dans les revendications précédentes et on en déduit un décalage latéral qui subsiste éventuellement ou une erreur angulaire pour juger de la qualité de la liaison par épissure.

14. Procédé suivant la revendication 13, caractérisé en ce que, pour des appareils à épissures multiples, on calcule un décalage latéral et éventuellement une erreur angulaire pour chaque paire de fibres soudée.

15. Procédé suivant l'une des revendications précédentes, caractérisé en ce qu'on détermine la répartition d'intensité aussi près que possible des faces frontales des extrémités (SF1, SF2) de fibres.

16. Procédé suivant l'une des revendications précédentes, caractérisé en ce qu'on effectue plusieurs échantillonnages pour déterminer la répartition d'intensité en le même point de l'axe (LA1, LA2) longitudinal des extrémités (FE1, FE2) de fibres.

17. Procédé suivant l'une des revendications 1 à 16, caractérisé en ce qu'on effectue plusieurs échantillonnages pour déterminer la répartition d'intensité en divers points de l'axe (LA1, LA2) longitudinal des extrémités (FE1, FE2) de fibres.

18. Procédé suivant l'une des revendications précédentes, caractérisé en ce qu'on effectue un échantillonnage de la reproduction de la fibre dans la direction de son axe (LA1, LA2) longitudinal de fibre, en ce que, à partir de la répartition d'intensité associée, on détermine la dimension de l'intervalle entre deux extrémités de fibres, et en ce que, à partir de cette dimension, on effectue un réglage des extrémités de fibres dans la direction (z) longitudinale des extrémités (FE1, FE2) de fibres.

19. Dispositif de mise en oeuvre du procédé suivant l'une des revendications précédentes, les extrémités de fibres se comportant comme des lentilles cylindriques étant éclairées au moyen d'une source (LQ) lumineuse, et une silhouette ainsi produite des extrémités de fibres étant échantillonnée au moyen d'une caméra vidéo, caractérisée en ce que la source (LQ) de lumière dirige de la lumière blanche sur les extrémités (FE1, FE2) de fibres, en ce qu'il est prévu des dispositifs de mémorisation, dans lesquels, pour chacun des deux plans d'une direction perpendiculaire à l'axe longitudinal des fibres, les répartitions d'intensité destinées à la reproduction de chaque extrémité de fibre sont mémorisées séparément comme valeurs discrètes d'intensité, et en ce qu'il est prévu un dispositif de réglage qui, sur la base d'une grandeur réglante obtenue à partir de la distance des maxima des répartitions d'intensité mémorisées, provoque un réglage d'au moins un dispositif (par exemple HR2) de maintien recevant les extrémités de fibres.

FIG1

FIG2

FIG 3

FIG 4

FIG 5

FIG 6

FIG 8

FIG 7

FIG 9

FIG 10

FIG 11